# EUROPÄISCHE PATENTSCHRIFT

(11) **EP 2 373 736 B1**
(45) Veröffentlichungstag und Bekanntmachung des Hinweises auf die Patenterteilung: **14.05.2014**
(21) Anmeldenummer: 09756514.7
(22) Anmeldetag: 25.11.2009
(51) Int. Cl.: C08L 29/10, C08L 33/02, C08L 35/08, C04B 24/26

(54) **COPOLYMERMISCHUNG ENTHALTENDES DISPERGIERMITTEL**
DISPERSANT COMPRISING A MIXTURE OF COPOLYMERS
AGENT DISPERSANT COMPRENANT UN MÉLANGE DE COPOLYMÈRES

(30) Priorität: 08.12.2008 EP 08170966
(43) Veröffentlichungstag der Anmeldung: 12.10.2011
(73) Patentinhaber: Construction Research & Technology GmbH, 83308 Trostberg (DE)
(72) Erfinder: VIERLE, Mario, 83512 Wasserburg (DE); LORENZ, Klaus, 84539 Zangberg (DE); FLAKUS, Silke, 85560 Ebersberg (DE); WAGNER, Petra, 83308 Trostberg (DE); SCHOLZ, Christian, 84518 Wald an der Alz (DE); WIMMER, Barbara, 83342 Tacherting (DE); BICHLER, Manfred, 84549 Engelsberg (DE); HARTL, Angelika, 83342 Emertsham (DE); WINKLBAUER, Martin, 84553 Halsbach (DE)
(86) Internationale Anmeldenummer: PCT/EP2009/065785
(87) Internationale Veröffentlichungsnummer: WO 2010/076092

(56) Entgegenhaltungen:
- EP-A1- 0 556 061
- EP-A1- 0 924 174
- WO-A1-00/77058
- WO-A2-2005/075529

## Beschreibung

Die vorliegende Erfindung betrifft eine Polymerkomposition, ein Dispergiermittel, die Herstellung der Polymerkomposition und des Dispergiermittels sowie die Verwendung der Polymerkomposition.

Es ist bekannt, dass man wässrigen Aufschlämmungen von pulverförmigen anorganischen oder organischen Substanzen, wie Tonen, Silikatmehl, Kreide, Ruß, Gesteinsmehl und hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Derartige Zusatzmittel sind in der Lage, die Bildung von Feststoffagglomeraten zu verhindern, die bereits vorhandenen und durch Hydratation neu gebildeten Teilchen zu dispergieren und auf diese Weise die Verarbeitbarkeit zu verbessern. Dieser Effekt wird insbesondere auch gezielt bei der Herstellung von Baustoffmischungen, die hydraulische Bindemittel wie Zement, Kalk, Gips, Halbhydrat oder Anhydrit enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Betonkörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktions- oder Fließmittel bezeichnet werden. Als derartige Mittel werden in der Praxis insbesondere Copolymere eingesetzt, welche durch radikalische Copolymerisation von Säuremonomeren und/oder Säurederivatmonomeren mit Polyethermakromonomeren hergestellt werden.

In der WO 2005/075529 werden Copolymere beschrieben, welche neben Säuremonomer-Struktureinheiten als Polyethermakromonomer-Struktureinheiten Hydroxybutylvinylpolyethylenglykol-Struktureinheiten aufweisen. Derartige Copolymertypen sind als Hochleistungsfließmittel weit verbreitet, da diese vorzügliche Anwendungseigenschaften aufweisen.

Obwohl die beschriebenen Copolymere als wirtschaftliche Hochleistungsfließmittel anzusehen sind, besteht weiterhin ein Bestreben, die Qualität und die Wirtschaftlichkeit der Copolymere noch weiter zu verbessern.

Die der vorliegenden Erfindung zugrunde liegende Aufgabe ist es somit, ein wirtschaftliches Dispergiermittel für hydraulische Bindemittel bereitzustellen, welches sich insbesondere gut als Fließmittel für Beton eignet.

Die Lösung dieser Aufgabe ist eine Polymerkomposition enthaltend 3 bis 90 Gew.-% eines Copolymers H sowie 3 bis 90 Gew.-% eines Copolymers K, wobei die Copolymere H und K jeweils Polyethermakromonomerstruktureinheiten und Säuremonomerstruktureinheiten aufweisen, welche in den Copolymeren H und K jeweils in einem molaren Verhältnis von 1 : 20 bis 1 : 1 vorliegen, sowie mindestens 20 Mol-% sämtlicher Struktureinheiten des Copolymers H und mindestens 25 Mol-% sämtlicher Struktureinheiten des Copolymers K jeweils in Form von Säuremonomerstruktureinheiten vorliegen, mindestens 60 Mol-% der Polyethermakromonomerstruktureinheiten des Copolymers H durch die Isoprenolpolyetherderivat-Struktureinheit α der allgemeine Formel (la) repräsentiert werden 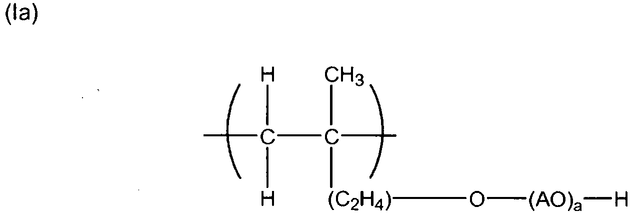 mit
A gleich oder verschieden sowie repräsentiert durch eine Alkylengruppe gemäß CₓH₂ₓ mit x = 2, 3, 4 oder 5, sowie
a gleich oder verschieden und repräsentiert durch eine ganze Zahl zwischen 4 und 300,
mindestens 60 Mol-% der Polyethermakromonomerstruktureinheiten des Copolymers K durch die Vinyloxypolyetherderivat-Struktureinheit β der allgemeine Formel (Ib) repräsentiert werden 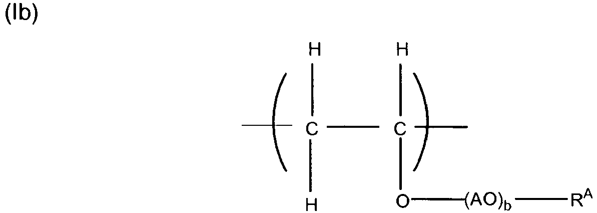 mit R^{A} gleich oder verschieden sowie repräsentiert durch ein Wasserstoffatom, eine lineare oder verzweigte C₁-C₁₂ Alkylgruppe, C₅-C₈ Cycloalkylgruppe, Phenylgruppe oder C₇-C₁₂ Arylalkylgruppe,
A gleich oder verschieden sowie repräsentiert durch eine Alkylengruppe gemäß CₓH₂ₓ mit x = 2, 3, 4 oder 5, sowie
b gleich oder verschieden sowie repräsentiert durch eine ganze Zahl von 6 - 450,
wobei die arithmetisch mittlere Anzahl der Alkylengruppen A der Struktureinheiten, welche der Vinyloxypolyetherderivat-Struktureinheit β zugehören um mindestens den Faktor 1,5 höher ist als die arithmetisch mittlere Anzahl der Alkylengruppen A der Struktureinheiten, welche der Isoprenolpolyetherderivat-Struktureinheit α zugehören.

Die Säuremonomerstruktureinheiten werden durch Einpolymerisation der entsprechenden Säuremonomere erzeugt. In diesem Zusammenhang sollen als Säuremonomer radikalisch copolymerisierbare, mindestens eine Kohlenstoffdoppelbindung aufweisende Monomere verstanden werden, welche mindestens eine Säurefunktion enthalten und im wässrigen Medium als Säure reagieren. Weiterhin sollen als Säuremonomer auch radikalisch copolymerisierbare, mindestens eine Kohlenstoffdoppelbindung aufweisende Monomere verstanden werden, welche aufgrund von Hydrolysereaktion im wässrigen Medium mindestens eine Säurefunktion ausbilden und im wässrigen Medium als Säure reagieren (Beispiel: Maleinsäureanhydrid oder basisch hydrolysierbare Ester wie Ethylacrylat). Die Polyethermakromonomerstruktureinheiten werden durch Einpolymerisation der entsprechenden Polyethermakromonomere erzeugt. In diesem Zusammenhang sind Polyethermakromonomere im Sinne der vorliegenden Erfindung radikalisch copolymerisierbare Verbindungen mit mindestens einer Kohlenstoffdoppelbindung, welche Ether-Sauerstoffatome aufweisen. Die in dem Copolymer enthaltenen Polyethermakromonomerstruktureinheiten weisen somit jeweils mindestens eine Seitenkette auf, die Ether-Sauerstoffatome enthält.

Allgemein kann gesagt werden, dass die Wirkungsweise von relevanten Polyethermakromonomerstruktureinheiten sowie Säurestruktureinheiten aufweisenden Copolymeren von deren strukturellen Parametern bestimmt wird. Das Wirkungsspektrum von entsprechenden Hochleistungscopolymeren deckt die gesamte Bandbreite von extremer Wasserreduktion bis zu extremer Konsistenzhaltung ab, wobei strukturelle Parameter, die für Wasserreduktion sorgen, einer guten Konsistenzhaltung entgegenstehen. So ist neben der Ladungsmenge pro Masseneinheit auch die Länge der Seitenketten, z.B. bezüglich der Wasserreduktionsfähigkeit, ausschlaggebend. Für die jeweilige praktische Anwendung ist häufig ein "Kompromiss" bezüglich der Wahl von kurzen und langen Seitenketten optimal, wobei erkannt wurde, dass Mischungen aus kurzen und langen Seitenketten in dieser Hinsicht meist die beste Lösung bieten. Die vorliegende Erfindung verwirklicht, wie derartige Mischungen wirtschaftlich und qualitativ hochwertig bereitgestellt werden. Die Polyethermakromonomerstruktureinheiten des Copolymers K, welchem vom Vinyloxypolyethertyp sind, lassen sich aufgrund der höheren Reaktivität des entsprechenden Monomers leichter mit langen Polyetherseitenketten einpolymerisieren (also auch leichter mit einem geringen Restmonomergehalt) als vergleichsweise die Polyethermakromonomerstruktureinheiten des Copolymers H, welche vom Isoprenolpolyethertyp sind. Copolymer K ist somit einfacher in qualitativ hochwertiger Weise mit langen Polyetherseitenketten herstellbar als vergleichsweise Copolymer H. Copolymer H ist jedoch aber auch verhältnismäßig leicht und effektiv (mit geringem Restmonomergehalt) mit kurzen Seitenketten herstellbar, wobei entsprechende Monomere des Isoprenolpolyethertyps als vergleichsweise kostengünstig verfügbare Ausgangsstoffe anzusehen sind. Zusammenfassend kann gesagt werden, dass die erfindungsgemäße Polymerkomposition ein qualitativ hochwertiges und besonders wirtschaftliches Dispergiermittel für hydraulische Bindemittel darstellt.

Meist enthält die erfindungsgemäße Polymerkomposition 11 bis 75 Gew.-% eines Copolymers H sowie 6 bis 55 Gew.-% eines Copolymers K.

Bevorzugt liegen mindestens 50 Mol-% sämtlicher Struktureinheiten des Copolymers H und mindestens 50 Mol-% sämtlicher Struktureinheiten des Copolymers K jeweils in Form von Säuremonomerstruktureinheiten vor.

In der Regel werden mindestens 85 Mol-% der Polyethermakromonomerstruktureinheiten des Copolymers H durch die Isoprenolpolyetherderivat-Struktureinheit α der allgemeine Formel (la) repräsentiert 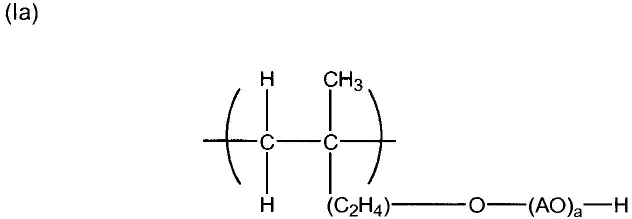 mit
A gleich oder verschieden sowie repräsentiert durch eine Alkylengruppe gemäß CₓH₂ₓ mit x = 2, 3, 4 oder 5, sowie
a gleich oder verschieden und repräsentiert durch eine ganze Zahl zwischen 5 und 39.

Typischerweise werden mindestens 85 Mol-% der Polyethermakromonomerstruktureinheiten des Copolymers K durch die Vinyloxypolyetherderivat-Struktureinheit β der allgemeine Formel (Ib) repräsentiert 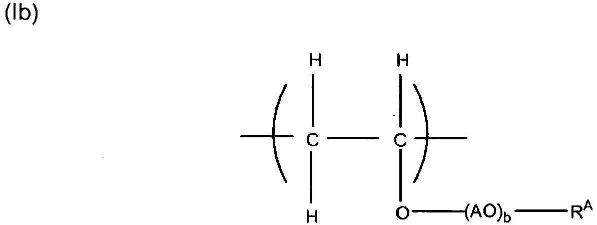 mit R^{A} gleich oder verschieden sowie repräsentiert durch ein Wasserstoffatom, eine lineare oder verzweigte C₁-C₁₂ Alkylgruppe, C₅-C₈ Cycloalkylgruppe, Phenylgruppe oder C₇-C₁₂ Arylalkylgruppe,
A gleich oder verschieden sowie repräsentiert durch eine Alkylengruppe gemäß CₓH2ₓ mit x = 2, 3, 4 oder 5, sowie
b gleich oder verschieden sowie repräsentiert durch eine ganze Zahl von 41 - 400.

Normalerweise ist die arithmetisch mittlere Anzahl der Alkylengruppen A der Struktureinheiten, welche der Vinyloxypolyetherderivat-Struktureinheit β zugehören um mindestens den Faktor 2 höher als die arithmetisch mittlere Anzahl der Alkylengruppen A der Struktureinheiten, welche der Isoprenolpolyetherderivat-Struktureinheit α zugehören.

In der Regel liegen die Säuremonomerstruktureinheiten der Copolymere H und K jeweils gemäß einer der allgemeinen Formeln (IIa), (IIb), (IIc) und/oder (IId) vor 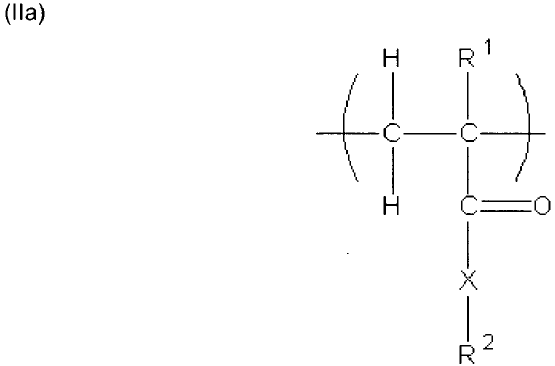 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 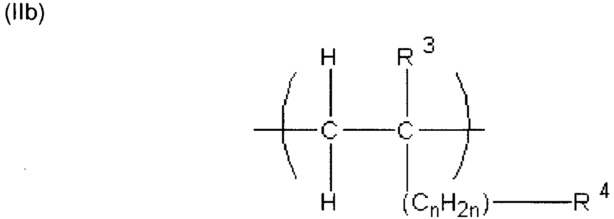 mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 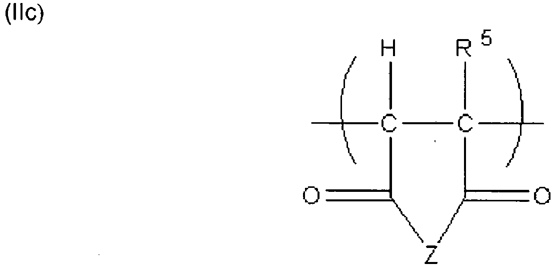 mit
R⁵ gleich oder verschieden sowie repräsentiert durch H und/oder eine unverzweigte oder verzweigte C₁ - C₄ Alkylgruppe;
Z gleich oder verschieden sowie repräsentiert durch O und/oder NH; 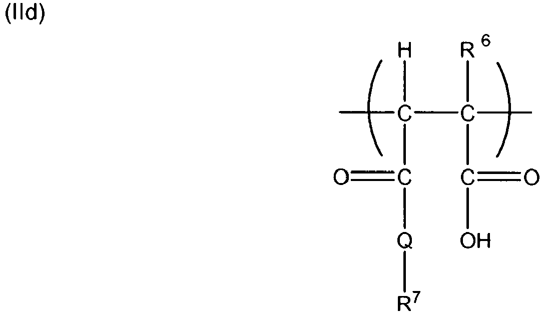 mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α} -R⁹ mit m = 0, 1, 2, 3 oder 4, e = 0, 1, 2, 3 oder 4, A' = C_{x'}H_{2x'} mit x' = 2, 3, 4 oder 5 und/oder CH₂C(C₆H₅)H-, α = eine ganze Zahl von 1 bis 350 mit R⁹ gleich oder verschieden sowie repräsentiert durch eine unverzweigte oder verzweigte C₁ - C₄ Alkylgruppe.

Häufig werden die Säuremonomerstruktureinheiten der Copolymere H und K jeweils durch Einpolymerisation der Säuremonomere Methacrylsäure, Acrylsäure, Maleinsäure, Maleinsäureanhydrid und/oder Halbester der Maleinsäure erzeugt.

Je nach pH-Wert können die Säuremonomerstruktureinheiten auch in deprotonierter Form als Salz vorliegen, wobei dann als Gegenionen Na⁺, K⁺ sowie Ca²⁺ typisch sind.

Typischerweise werden die Vinyloxypolyetherderivat-Struktureinheiten β des Copolymers K durch Einpolymerisation von alkoxyliertem Hydroxybutylvinylether mit bevorzugt einer arithmetisch mittleren Zahl an Oxyalkylengruppen von 41 bis 400 erzeugt.

Die Copolymere H und K können jeweils die gleichen oder verschiedene Typen von Säuremonomerstruktureinheiten aufweisen.

In der Regel werden jeweils mindestens 80 Mol-% aller Struktureinheiten der Copolymere H und K durch Einpolymerisieren von Säuremonomer und Polyethermakromonomer erzeugt.

Die Erfindung betrifft auch ein Dispergiermittel enthaltend mindestens 30 Gew.-% Wasser sowie mindestens 10 Gew.-% der Polymerkomposition, welche vorstehend beschrieben ist. Das Dispergiermittel liegt bevorzugt in Form einer wässrigen Lösung vor.

Weiterhin betrifft die Erfindung ein Verfahren zur Herstellung der erfindungsgemäßen Polymerkomposition oder des erfindungsgemäßen Dispergiermittels, wobei die Copolymere H und K jeweils getrennt voneinander in wässriger Lösung hergestellt werden und anschließend die getrennt hergestellten Copolymere oder die getrennt hergestellten wässrigen Lösungen miteinander vermischt werden. Normalerweise werden Säuremonomer und Polyethermakromonomer durch radikalische Polymerisation unter Verwendung eines Peroxid enthaltenden Redoxinitiatorsystems in wässriger Lösung umgesetzt, wobei die Temperatur der wässrigen Lösung während der Polymerisation 10 bis 45 °C sowie der pH-Wert 3,5 bis 6,5 beträgt.

Schließlich betrifft die vorliegende Erfindung auch die Verwendung der erfindungsgemäßen Polymerkomposition als Dispergiermittel für hydraulische Bindemittel und/oder für latenthydraulische Bindemittel. Die erfindungsgemäße Polymerkomposition kann beispielsweise auch (insbesondere in entwässerter Form) als Additiv für die Zementproduktion (Mahlhilfe und "Wasserreduzierer" für reine Portlandzemente bzw. Kompositzemente) eingesetzt werden.

Nachstehend soll die Erfindung anhand von Ausführungsbespielen näher erläutert werden.

### Polymer 1

In einem Glasreaktor - ausgestattet mit Rührer, pH-Elektrode und mehreren Zulaufeinrichtungen - wurden 400,0 g deionisiertes Wasser und 450,0 g Vinyloxybutylpolyethylenglykol (Anlagerungsprodukt aus 65 Mol Ethylenoxid an 4-Hydroxybutyl-1-monovinylether) vorgelegt und auf eine Polymerisationsstarttemperatur von 15 °C gekühlt.

In einem separaten Zulaufgefäß wurden 29,2 g Acrylsäure mit 84,3 g deionisiertem Wasser und 15,4 g einer 40 %igen Kaliumhydroxydlösung unter Kühlen vermischt.

Parallel wurde eine 6 %ige Lösung von Brüggolit® FF6 (Handelsprodukt Fa. Brüggemann GmbH) in Wasser hergestellt (Lösung B).

Unter Rühren und Kühlen wurden 43,4 mL der Lösung A, 3,5 mL einer 20 %igen wässrigen Natronlauge und 0,5 g 3-Mercaptopropionsäure in den Reaktor dosiert. Zur verbleibenden Lösung A werden 0,9 g 3-Mercaptopropionsäure gegeben.

Zum Start der Reaktion wurden nacheinander 0,030 g Eisen-II-sulfat-Heptahydrat und 1,9 g Wasserstoffperoxid (30 % in Wasser) in den Reaktor gegeben. Zeitgleich wurde mit der Zugabe von Lösung A und Lösung B zur gerührten Vorlage begonnen.

Die Zugabegeschwindigkeit der Lösung A findet sich in folgendem Dosierprofil wieder.

| | | | | | | | | | | | | |
|---|---|---|---|---|---|---|---|---|---|---|---|---|
| t (min) | 0 | 1,5 | 3 | 6 | 9 | 12 | 15 | 18 | 21 | 24 | 27 | 30 |
| Lösung A (mL/h) | 55 | 110 | 193 | 231 | 215 | 193 | 165 | 132 | 105 | 82 | 66 | 49 |
| t (min) | 33 | 36 | 39 | 45 | | | | | | | | |
| Lösung A (mL/h) | 40 | 28 | 24 | 0 | | | | | | | | |

Zeitgleich mit der Lösung A wurde bei Bedarf 20 %igen wässrigen Natronlauge dosiert, um den pH-Wert der Reaktionsmischung nicht unter 5,5 fallen zu lassen.

Lösung B wurde über den genannten Zeitraum von 45 Minuten mit konstanter Dosierrate zugegeben. Nach Abschluss der Dosierung von Lösung A wurde noch so lange Lösung B dosiert, bis die Reaktionsmischung peroxidfrei war. Anschließend wurde die erhaltene Polymerlösung mit 20 %igen Natriumhydroxidlösung neutralisiert (pH 6,5 - 7,0).

Das erhaltene Copolymer fiel als leicht gelblich gefärbten Lösung an und wies ein Gewichtsmittel der Molmasse von 64000 g/Mol (bestimmt mittels GPC) auf.

### Synthesebeispiel 2

In einem Glasreaktor - ausgestattet mit Rührer, pH-Elektrode und mehreren Zulaufeinrichtungen - wurden 125,0 g deionisiertes Wasser und 137,5 g Vinyloxybutylpolyethylenglykol-1100 (Anlagerungsprodukt aus 22 Mol Ethylenoxid an 4-Hydroxybutyl-1-monovinylether) und 62,5 g (0,125 Mol) Vinyloxybutylpolyethylenglykol-500 (Anlagerungsprodukt aus 10 Mol Ethylenoxid an 4-Hydroxybutyl-1-monovinylether) vorgelegt und auf eine Polymerisationsstarttemperatur von 12 °C gekühlt.

In einem separaten Zulaufgefäß wurden unter Kühlen 25,2 g Acrylsäure, 9,8 g 2-Hydroxypropylacrylat und 12,5 g einer 40 %igen Kaliumhydroxidlösung mit 101,8 g deionisiertem Wasser homogen vermischt. Anschließend wurden 2,4 g 3-Mercaptopropionsäure zugegeben (Lösung A).

Parallel wurde eine 6 %ige Lösung von Brüggolit® FF6 (Handelsprodukt Fa. Brüggemann GmbH) in Wasser hergestellt (Lösung B).

Unter Rühren und Kühlen wurden 43,6 mL der Lösung A sowie anschließend 12,2 g einer 20 %igen wässrigen Natronlauge in den Reaktor gegeben.

Danach wurden nacheinander 0,0465 g Eisen-II-sulfat-Heptahydrat zugegeben und die Reaktion durch Zugabe von 2,9 g Wasserstoffperoxid (30 % in Wasser) zum Vorlagegemisch gestartet. Zeitgleich wurde mit der Zugabe von Lösung A und Lösung B zur gerührten Vorlage begonnen.

Die Zugabegeschwindigkeit der restlichen Lösung A ist dem folgenden Dosierprofils zu entnehmen.

| | | | | | | | | | | | | |
|---|---|---|---|---|---|---|---|---|---|---|---|---|
| T (min) | 0 | 1,5 | 3 | 6 | 9 | 12 | 15 | 18 | 21 | 24 | 27 | 30 |
| Lösung A (mUh) | 70 | 139 | 244 | 292 | 272 | 244 | 209 | 167 | 132 | 103 | 83 | 62 |
| T (min) | 33 | 36 | 39 | 45 | | | | | | | | |
| Lösung A (mUh) | 50 | 35 | 31 | 0 | | | | | | | | |

Die Zugabegeschwindigkeit der Lösung B wurde während der Dosierung von Lösung A auf 18 mL/h eingestellt. Nach Dosierung von Lösung A wurde noch so lange Lösung B in den Reaktor dosiert, bis die Reaktionsmischung peroxidfrei war.

Während der Reaktionszeit wurde bei Bedarf 20 %igen wässrigen Natronlauge zugegeben um den pH Wert über 5,6 zu halten.

Anschließend wurde die erhaltene Polymerlösung 20 %igen Natriumhydroxid-Lösung auf einen pH-Wert von 6,5 eingestellt.

Das erhaltene Copolymer fiel in einer leicht gelblich gefärbten Lösung an, die einen Feststoffgehalt von 43,8 % aufwies. Das Gewichtsmittel der Molmasse Copolymers lag bei 23000 g/Mol, der Gesamtumsatz (bestimmt mittels GPC-Spektrum) betrug 94 %.

### Synthesebeispiel 3

In einem Glasreaktor - ausgestattet mit Rührer, pH-Elektrode und mehreren Zulaufeinrichtungen - wurden 87,0 g deionisiertes Wasser und 82,5 g Isoprenolpolyethylenglykol-1100 (Anlagerungsprodukt aus 23 Mol Ethylenoxid an 3-Methylbut-3-en-1ol) und 37,5 g Isoprenolpolyethylenglykol-500 (Anlagerungsprodukt aus 10 Mol Ethylenoxid an 3-Methylbut-3-en-1ol) vorgelegt und auf eine Polymerisationsstarttemperatur von 15 °C gekühlt.

In einem separaten Zulaufgefäß wurden unter Kühlen 16,2 g Acrylsäure, 5,9 g 2-Hydroxypropylacrylat und 9,2 g einer 40 %igen Kaliumhydroxidlösung mit 49,5 g deionisiertem Wasser homogen vermischt (Lösung A).

Parallel wurde eine 6 %ige Lösung von Brüggolit® FF6 (Handelsprodukt Fa. Brüggemann GmbH) in Wasser hergestellt (Lösung B).

Unter Rühren und Kühlen wurden 27,5 mL der Lösung A, 1,1 g 3-Mercaptopropionsäure sowie anschließend 0,5 g einer 20 %igen wässrigen Natronlauge in den Reaktor gegeben. Zu der verbleibenden Lösung A wurden 0,9 g 3-Mercaptopropionsäure gegeben.

Danach wurden nacheinander 0,0465 g Eisen-II-sulfat-Heptahydrat zugegeben und die Reaktion durch Zugabe von 2,9 g Wasserstoffperoxid (30 % in Wasser) zum Vorlagegemisch gestartet. Zeitgleich wurde mit der Zugabe von Lösung A und Lösung B zur gerührten Vorlage begonnen.

Die Zugabegeschwindigkeit der restlichen Lösung A ist dem folgenden Dosierprofils zu entnehmen.

| | | | | | | | | | | | | |
|---|---|---|---|---|---|---|---|---|---|---|---|---|
| T (min) | 0 | 1,5 | 3 | 6 | 9 | 12 | 15 | 18 | 21 | 24 | 27 | 30 |
| Lösung A (mL/h) | 35,0 | 70,0 | 123 | 147 | 136 | 123 | 105 | 84 | 67 | 52 | 42 | 31 |
| T (min) | 33 | 36 | 39 | 45 | | | | | | | | |
| Lösung A (mUh) | 25 | 18 | 16 | 0 | | | | | | | | |

Die Zugabegeschwindigkeit der Lösung B wurde während der Dosierung von Lösung A auf 27 mL/h eingestellt. Nach Dosierung von Lösung A wurde noch so lange Lösung B in den Reaktor dosiert, bis die Reaktionsmischung peroxidfrei war.

Während der Reaktionszeit wurde bei Bedarf 20 %igen wässrigen Natronlauge zugegeben um den pH Wert über 5,1 zu halten.

Anschließend wurde die erhaltene Polymerlösung mit 20 %igen NatriumhydroxidLösung auf einen pH-Wert von 6,5 eingestellt.

Das erhaltene Copolymer fiel in einer leicht gelblich gefärbten Lösung an, die einen Feststoffgehalt von 43,0 % aufwies. Das Gewichtsmittel der Molmasse Copolymers lag bei 28000 g/Mol, der Gesamtumsatz (bestimmt mittels GPC-Spektrum) betrug 94 %.

### Anwendungstests:

330 kg Portlandzement (CEM I 42,5 R) sowie 30 kg Kalksteinmehl wurden mit runden Zuschlägen, zusammengesetzt entsprechend der Fuller-Sieblinie mit einem Größtkorn von 16 mm und 152 kg Wasser, welches die erfindungsgemäßen Produkte bzw. die Vergleichsprodukte in gelöster Form enthielt, angerührt. Unmittelbar nach der Herstellung der Betonmischung erfolgten die Bestimmung des Ausbreitmaßes (nach DIN 12350-5) sowie dessen zeitliche Veränderung über einen Zeitraum von 60 Minuten.

Die Ergebnisse der Prüfung zeigt unten stehende Tabelle.

| Fließmittel¹ | Dosierung² | Ausbreitmaß in cm | | |
|---|---|---|---|---|
| | | 0 min | 10 min | 60 min |
| Polymer 1 | 0,13 % | 59 | 40 | 37 |
| Polymermischung 1a | 0,18 % | 60 | 50 | 45 |
| Polymermischung 1b | 0,18 % | 60 | 49 | 44 |

| | | | | |
|---|---|---|---|---|
| ¹ Polymer 1 = Polymer nach Synthesebeispiel 1; Polymermischung 1a = physikalische Abmischung aus Polymer nach Synthesebeispiel 1 und Polymer nach Synthesebeispiel 2, Mischungsverhältnis (Mengenverhältnis) 1 : 1; Polymermischung 1 b = physikalische Abmischung aus Polymer nach Synthesebeispiel 1 und Polymer nach Synthesebeispiel 3, Mischungsverhältnis (Mengenverhältnis) 1 : 1 ² Dosierung in Gew.-% Polymerfeststoff bezogen auf die Zementeinwaage | | | | |

Aus den Anwendungsbeispielen wird deutlich, dass die Anwendungseigenschaften der Polymermischung 1a und 1b im Rahmen der Messgenauigkeit identisch sind. Somit stellt die Polymermischung 1b ein besonders wirtschaftliches Dispergiermittel dar, da die bei der in Polymermischung 1b verwendete Polymerkomponente nach Synthesebeispiel 3 kostengünstige Isoprenolpolyethermakromonomerstruktureinheiten enthält. Aufgrund der identischen Anwendungseigenschaften wird dieser wirtschaftliche Vorteil nicht durch eine eventuell höhere Dosierung vermindert.

## Patentansprüche

1. Polymerkomposition enthaltend 3 bis 90 Gew.-% eines Copolymers H sowie 3 bis 90 Gew.-% eines Copolymers K, wobei die Copolymere H und K jeweils Polyethermakromonomerstruktureinheiten und Säuremonomerstruktureinheiten aufweisen, welche in den Copolymeren H und K jeweils in einem molaren Verhältnis von 1 : 20 bis 1 : 1 vorliegen, sowie mindestens 20 Mol-% sämtlicher Struktureinheiten des Copolymers H und mindestens 25 Mol-% sämtlicher Struktureinheiten des Copolymers K jeweils in Form von Säuremonomerstruktureinheiten vorliegen,
mindestens 60 Mol-% der Polyethermakromonomerstruktureinheiten des Copolymers H durch die Isoprenolpolyetherderivat-Struktureinheit α der allgemeine Formel (la) repräsentiert werden 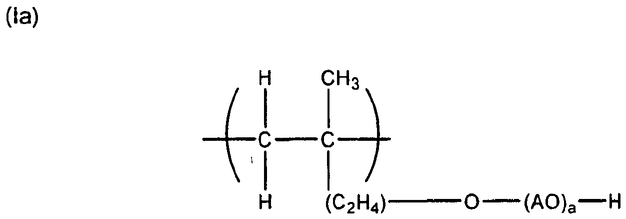 mit
A gleich oder verschieden sowie repräsentiert durch eine Alkylengruppe gemäß CₓH₂ₓ mit x = 2, 3, 4 oder 5, sowie
a gleich oder verschieden und repräsentiert durch eine ganze Zahl zwischen 4 und 300,
mindestens 60 Mol-% der Polyethermakromonomerstruktureinheiten des Copolymers K durch die Vinyloxypolyetherderivat-Struktureinheit β der allgemeine Formel (Ib) repräsentiert werden 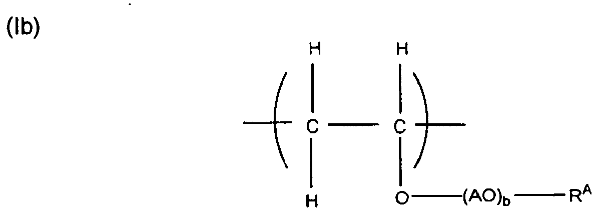 mit R^{A} gleich oder verschieden sowie repräsentiert durch ein Wasserstoffatom, eine lineare oder verzweigte C₁-C₁₂ Alkylgruppe, C₅-C₈ Cycloalkylgruppe, Phenylgruppe oder C₇-C₁₂ Arylalkylgruppe,
A gleich oder verschieden sowie repräsentiert durch eine Alkylengruppe gemäß CₓH₂x mit x = 2, 3, 4 oder 5, sowie
b gleich oder verschieden sowie repräsentiert durch eine ganze Zahl von 6 - 450,
wobei die arithmetisch mittlere Anzahl der Alkylengruppen A der Struktureinheiten, welche der Vinyloxypolyetherderivat-Struktureinheit β zugehören um mindestens den Faktor 1,5 höher ist als die arithmetisch mittlere Anzahl der Alkylengruppen A der Struktureinheiten, welche der Isoprenolpolyetherderivat-Struktureinheit α zugehören.

2. Polymerkomposition nach Anspruch 1, enthaltend 11 bis 75 Gew.-% eines Copolymers H sowie 6 bis 55 Gew.-% eines Copolymers K.

3. Polymerkomposition nach Anspruch 1 oder 2, **dadurch gekennzeichnet, dass** mindestens 50 Mol-% sämtlicher Struktureinheiten des Copolymers H und mindestens 50 Mol-% sämtlicher Struktureinheiten des Copolymers K jeweils in Form von Säuremonomerstruktureinheiten vorliegen.

4. Polymerkomposition nach einem der Ansprüche 1 bis 3, **dadurch gekennzeichnet, dass** mindestens 85 Mol-% der Polyethermakromonomerstruktureinheiten des Copolymers H durch die Isoprenolpolyetherderivat-Struktureinheit α der allgemeine Formel (la) repräsentiert werden 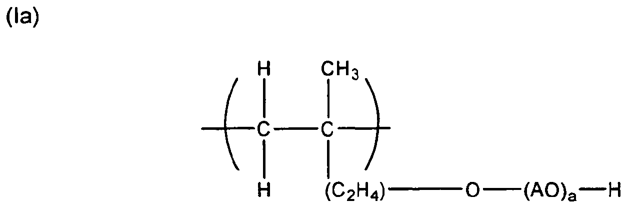 mit
A gleich oder verschieden sowie repräsentiert durch eine Alkylengruppe gemäß CₓH₂ₓ mit x = 2, 3, 4 oder 5, sowie
a gleich oder verschieden und repräsentiert durch eine ganze Zahl zwischen 5 und 39.

5. Polymerkomposition nach einem der Ansprüche 1 bis 4, **dadurch gekennzeichnet, dass** mindestens 85 Mol-% der Polyethermakromonomerstruktureinheiten des Copolymers K durch die Vinyloxypolyetherderivat-Struktureinheit β der allgemeine Formel (Ib) repräsentiert werden 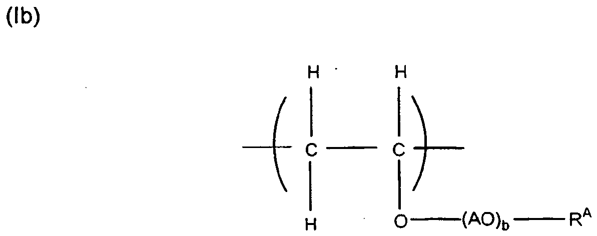 mit
R^{A} gleich oder verschieden sowie repräsentiert durch ein Wasserstoffatom, eine lineare oder verzweigte C₁-C₁₂ Alkylgruppe, C₅-C₈ Cycloalkylgruppe, Phenylgruppe oder C₇-C₁₂ Arylalkylgruppe, 5
A gleich oder verschieden sowie repräsentiert durch eine Alkylengruppe gemäß CₓH₂ₓ mit x = 2, 3, 4 oder 5, sowie
b gleich oder verschieden sowie repräsentiert durch eine ganze Zahl von 41 - 400.

6. Polymerkomposition nach einem der Ansprüche 1 bis 5, **dadurch gekennzeichnet, dass** die arithmetisch mittlere Anzahl der Alkylengruppen A der Struktureinheiten, welche der Vinyloxypolyetherderivat-Struktureinheit β zugehören um mindestens den Faktor 2 höher ist als die arithmetisch mittlere Anzahl der Alkylengruppen A der Struktureinheiten, welche der Isoprenolpolyetherderivat-Struktureinheit α zugehören.

7. Polymerkomposition nach einem der Ansprüche 1 bis 6, **dadurch gekennzeichnet, dass** die Säuremonomerstruktureinheiten der Copolymere H und K jeweils gemäß einer der allgemeinen Formeln (IIa), (IIb), (IIc) und/oder (IId) vorliegen 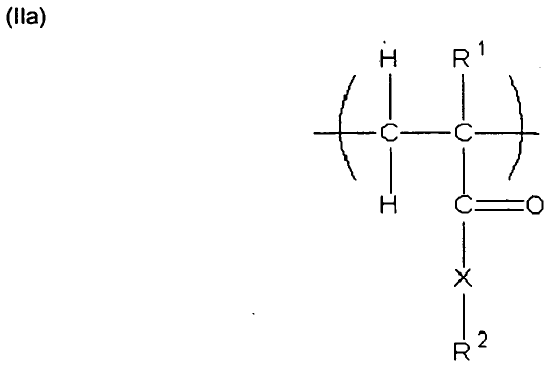 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 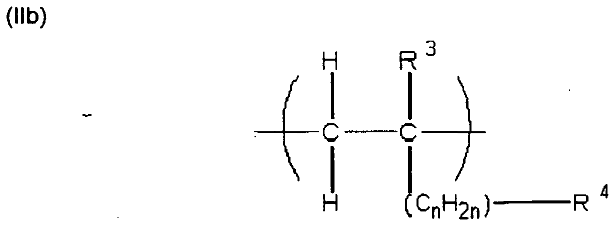 mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 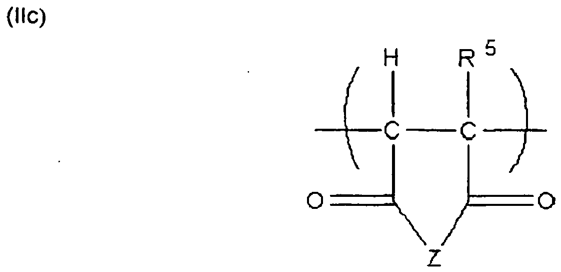 mit
R⁵ gleich öder verschieden sowie repräsentiert durch H und/oder eine unverzweigte oder verzweigte C₁ - C₄ Alkylgruppe;
Z gleich oder verschieden sowie repräsentiert durch O und/oder NH; 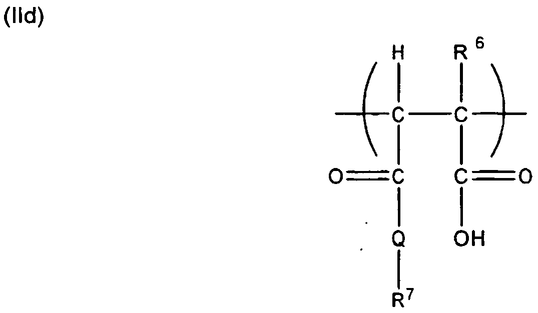 mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂n)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α} -R⁹ mit m = 0, 1, 2, 3 oder 4, e = 0, 1, 2, 3 oder 4, A' = C_{x'}H_{2x'} mit x' = 2, 3, 4 oder 5 und/oder CH₂C(C₆H₅)H-, α = eine ganze Zahl von 1 bis 350 mit R⁹ gleich oder verschieden sowie repräsentiert durch eine unverzweigte oder verzweigte C₁ - C₄ Alkylgruppe.

8. Polymerkomposition nach einem der Ansprüche 1 bis 7, **dadurch gekennzeichnet, dass** die Säuremonomerstruktureinheiten der Copolymere H und K jeweils durch Einpolymerisation der Säuremonomere Methacrylsäure, Acrylsäure, Maleinsäure, Maleinsäureanhydrid und/oder Halbester der Maleinsäure erzeugt werden.

9. Polymerkomposition nach einem der Ansprüche 1 bis 8, **dadurch gekennzeichnet, dass** die Vinyloxypolyetherderivat-Struktureinheiten β des Copolymers K durch Einpolymerisation von alkoxyliertem Hydroxybutylvinylether mit bevorzugt einer arithmetisch mittleren Zahl an Oxyalkylengruppen von 41 bis 400 erzeugt werden.

10. Polymerkomposition nach einem der Ansprüche 1 bis 9, **dadurch gekennzeichnet, dass** die Copolymere H und K jeweils die gleichen oder verschiedene Typen von Säuremonomerstruktureinheiten aufweisen.

11. Polymerkomposition nach einem der Ansprüche 1 bis 10, **dadurch gekennzeichnet, dass** jeweils mindestens 80 Mol-% aller Struktureinheiten der Copolymere H und K durch Einpolymerisieren von Säuremonomer und Polyethermakromonomer erzeugt werden.

12. Dispergiermittel enthaltend mindestens 30 Gew.-% Wasser sowie mindestens 10 Gew.-% der Polymerkomposition gemäß einem der Ansprüche 1 bis 11.

13. Dispergiermittel nach Anspruch 12, welches in Form einer wässrigen Lösung vorliegt.

14. Verfahren zur Herstellung einer Polymerkomposition gemäß einem der Ansprüche 1 bis 10 oder eines Dispergiermittels gemäß Anspruch 12 oder 13, **dadurch gekennzeichnet, dass** die Copolymere H und K jeweils getrennt voneinander in wässriger Lösung hergestellt werden und anschließend die getrennt hergestellten Copolymere oder die getrennt hergestellten wässrigen Lösungen miteinander vermischt werden.

15. Verfahren nach Anspruch 14, **dadurch gekennzeichnet, dass** Säuremonomer und Polyethermakromonomer durch radikalische Polymerisation unter Verwendung eines Peroxid enthaltenden Redoxinitiatorsystems in wässrigen Lösung umgesetzt werden, wobei die Temperatur der wässrigen Lösung während der Polymerisation 10 bis 45 °C sowie der pH-Wert 3,5 bis 6,5 beträgt.

16. Verwendung einer Polymerkomposition gemäß einem der Ansprüche 1 bis 15 als Dispergiermittel für hydraulische Bindemittel und/oder für latenthydraulische Bindemittel.

## Claims

1. Polymer composition containing 3 to 90% by weight of a copolymer H and 3 to 90% by weight of a copolymer K, the copolymers H and K each having polyether macromonomer structural units and acid monomer structural units, which are present in the copolymers H and K in each case in a molar ratio of 1:20 to 1:1, and at least 20 mol% of all structural units of the copolymer H and at least 25 mol% of all structural units of the copolymer K being present in each case in the form of acid monomer structural units,
at least 60 mol% of the polyether macromonomer structural units of the copolymer H being represented by the isoprenol polyether derivative structural unit α of the general formula (Ia) 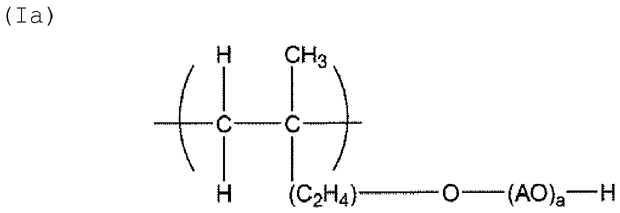 where
A are identical or different and are represented by an alkylene group according to CₓH₂ₓ where x = 2, 3, 4 or 5, and
a are identical or different and are represented by an integer between 4 and 300,
at least 60 mol% of the polyether macromonomer structural units of the copolymer K being represented by the vinyloxy polyether derivative structural unit β of the general formula (Ib) 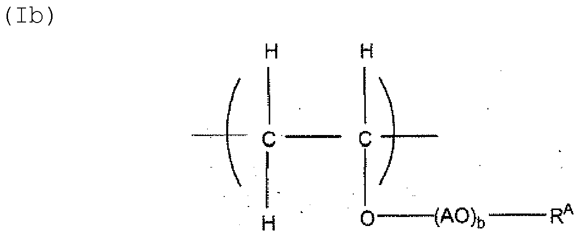 where R^{A} are identical or different and are represented by a hydrogen atom, a linear or branched C₁-C₁₂ alkyl group, C₅-C₈ cycloalkyl group, phenyl group or C₇-C₁₂ arylalkyl group,
A are identical or different and are represented by an alkylene group according to CₓH₂ₓ where x = 2, 3, 4 or 5, and
b are identical or different and are represented by an integer from 6 to 450,
the arithmetic mean of the alkylene groups A of the structural units which belong to the vinyloxy polyether derivative structural unit β being higher by at least the factor 1.5 than the arithmetic mean of the alkylene groups A of the structural units which belong to the isoprenol polyether derivative structural unit α.

2. Polymer composition according to Claim 1, containing 11 to 75% by weight of a copolymer H and 6 to 55% by weight of a copolymer K.

3. Polymer composition according to Claim 1 or 2, **characterized in that** at least 50 mol% of all structural units of the copolymer H and at least 50 mol% of all structural units of the copolymer K are present in each case in the form of acid monomer structural units.

4. Polymer composition according to any of Claims 1 to 3, **characterized in that** at least 85 mol% of polyether macromonomer structural units of copolymer H are represented by the isoprenol polyether derivatives structural unit α of the general formula (Ia) 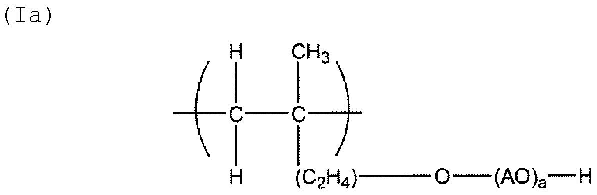 where
A are identical or different and are represented by an alkylene group according to CₓH₂ₓ where x = 2, 3, 4 or 5, and
a are identical or different and are represented by an integer between 5 and 39.

5. Polymer composition according to any of Claims 1 to 4, **characterized in that** at least 85 mol% of the polyether macromonomer structural units of the copolymer K are represented by the vinyloxy polyether derivative structural unit β of the general formula (Ib) 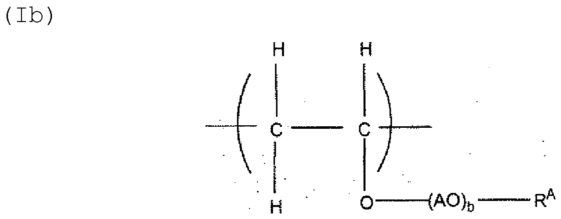 where
R^{A} are identical or different and are represented by a hydrogen atom, a linear or branched C₁-C₁₂ alkyl group, C₅-C₈ cycloalkyl group, phenyl group or C₇-C₁₂ arylalkyl group,
A are identical or different and are represented by an alkylene group according to CₓH₂ₓ where x = 2, 3, 4 or 5, and
b are identical or different and are represented by an integer from 41 to 400,

6. Polymer composition according to any of Claims 1 to 5, **characterized in that** the arithmetic mean of the alkylene groups A of the structural units which belong to the vinyloxy polyether derivative structural unit β is higher by at least the factor 2 than the arithmetic mean of the alkylene groups A of the structural units which belong to the isoprenol polyether derivative structural unit α.

7. Polymer composition according to any of Claims 1 to 6, **characterized in that** the acid monomer structural units of the copolymers H and K are present in each case according to one of the general formulae (IIa), (IIb), (IIc) and/or (IId) 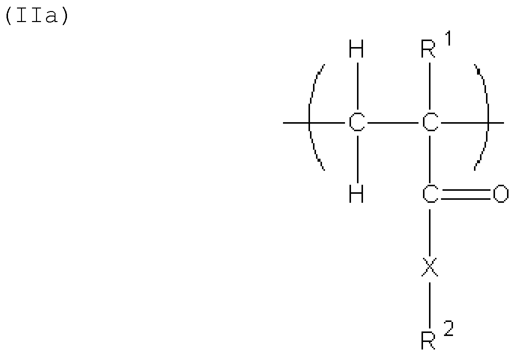 where
R¹ are identical or different and are represented by H and/or a straight-chain or a branched C₁ - C₄ alkyl group;
X are identical or different and are represented by NH-(CₙH₂ₙ) where n = 1, 2, 3 or 4 and/or O-(CₙH₂ₙ) where n = 1, 2, 3 or 4 and/or by a unit not present;
R² are identical or different and are represented by OH, SO₃H, PO₃H₂, O-PO₃H₂ and/or para-substituted C₆H₄-SO₃H, with the proviso that, if X is a unit not present, R² is represented by OH; 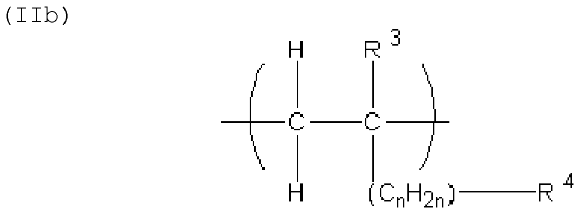 where
R³ are identical or different and are represented by H and/or a straight-chain or branched C₁ - C₄ alkyl group;
n = 0, 1, 2, 3 or 4;
R⁴ are identical or different and are represented by SO₃H, PO₃H₂, O-PO₃H₂ and/or para-substituted C₆H₄-SO₃H; 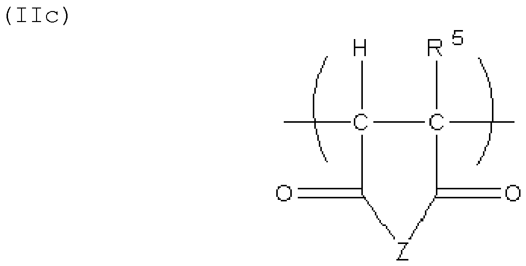 where
R⁵ are identical or different and are represented by H and/or a straight-chain or branched C₁ - C₄ alkyl group;
Z are identical or different and are represented by O and/or NH; 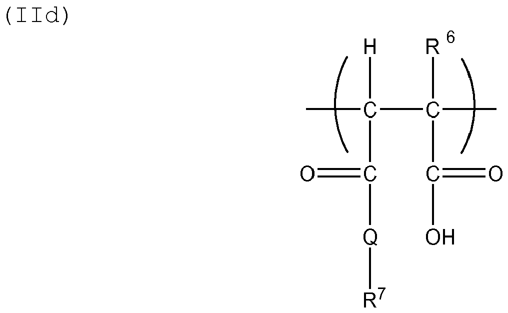 where
R⁶ are identical or different and are represented by H and/or a straight-chain or branched C₁ - C₄ alkyl group;
Q are identical or different and are represented by NH and/or O;
R⁷ are identical or different and are represented by H, (CₙH₂ₙ)-SO₃H where n = 0, 1, 2, 3 or 4, (CₙH₂ₙ)-OH where n = 0, 1, 2, 3 or 4; (CₙH₂ₙ)-PO₃H₂ where n = 0, 1, 2, 3 or 4, (CₙH₂ₙ)-OPO₃H₂ where n= 0, 1, 2, 3 or 4, (C₆H₄) -SO₃H, (C₆H₄) -PO₃H₂, (C₆H₄) -OPO₃H₂ and/or (CₘH₂ₘ)ₑ-O-(A'O)_{α}-R⁹ where m = 0, 1, 2, 3 or 4, e = 0, 1, 2, 3 or 4, A' = C_{x'}H_{2x'} where x' = 2, 3, 4 or 5 and/or CH₂C(C₆H₅)H-, α= an integer from 1 to 350 with R⁹ identical or different and represented by a straight-chain or a branched C₁ - C₄ alkyl group.

8. Polymer composition according to any of Claims 1 to 7, **characterized in that** the acid monomer structural units of the copolymers H and K are produced in each case by incorporation of the acid monomers methacrylic acid, acrylic acid, maleic acid, maleic anhydride and/or monoesters of maleic acid in the form of polymerized units.

9. Polymer composition according to any of Claims 1 to 8, **characterized in that** the vinyloxy polyether derivative structural units β of the copolymer K are produced by incorporating in the form of polymerized units alkoxylated hydroxybutyl vinyl ether having preferably an arithmetic mean of oxyalkylene groups of 41 to 400.

10. Polymer composition according to any of Claims 1 to 9, **characterized in that** the copolymers H and K have in each case the same or different types of acid monomer structural units.

11. Polymer composition according to any of Claims 1 to 10, **characterized in that** in each case at least 80 mol% of all structural units of the copolymers H and K are produced by incorporation of acid monomer and polyether macromonomer in the form of polymerized units.

12. Dispersant containing at least 30% by weight of water and at least 10% by weight of the polymer composition according to any of Claims 1 to 11.

13. Dispersant according to Claim 12, which is present in the form of an aqueous solution.

14. Process for the preparation of a polymer composition according to any of Claims 1 to 10 or of a dispersant according to Claim 12 or 13, **characterized in that** the copolymers H and K are each prepared separately from one another in aqueous solution and the separately prepared copolymers or the separately prepared aqueous solutions are then mixed with one another.

15. Process according to Claim 14, **characterized in that** acid monomer and polyether macromonomer are reacted by free radical polymerization with the use of a peroxide-containing redox initiator system in aqueous solution, the temperature of the aqueous solution during the polymerization being 10 to 45°C and the pH being 3.5 to 6.5.

16. Use of a polymer composition according to any of Claims 1 to 15 as a dispersant for hydraulic binders and/or for latent hydraulic binders.

## Revendications

1. Composition polymère contenant 3 à 90 % en poids d'un copolymère H et 3 à 90 % en poids d'un copolymère K, les copolymères H et K comprenant chacun des unités structurales à base de macromonomères de polyéther et des unités structurales à base de monomères acides, qui sont chacune présentes dans les copolymères H et K en un rapport molaire de 1:20 à 1:1, et au moins 20 % en moles de l'ensemble des unités structurales du copolymère H et au moins 25 % en moles de l'ensemble des unités structurales du copolymère K se présentant à chaque fois sous la forme d'unités structurales à base de monomères acides,
au moins 60 % en moles des unités structurales à base de macromonomères de polyéther du copolymère H étant représentées par l'unité structurale dérivée d'isoprénol-polyéther α de formule générale (Ia) 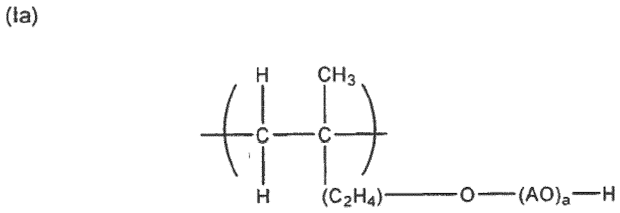 dans laquelle
les A sont identiques ou différents et représentent un groupe alkylène CₓH₂ₓ avec x = 2, 3, 4 ou 5, et
les a sont identiques ou différents et représentent un nombre entier compris entre 4 et 300,
au moins 60 % en moles des unités structurales à base de macromonomères de polyéther du copolymère K étant représentées par l'unité structurale dérivée de vinyloxy-polyéther β de formule générale (Ib) 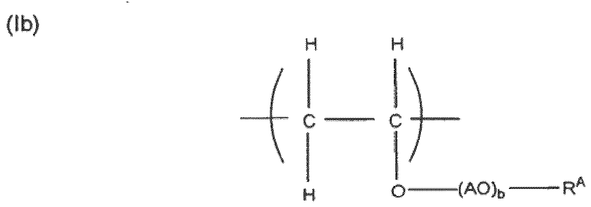 dans laquelle les R^{A} sont identiques ou différents et représentent un atome d'hydrogène, un groupe alkyle en C₁-C₁₂ linéaire ou ramifié, un groupe cycloalkyle en C₅-C₈, un groupe phényle ou un groupe arylalkyle en C₇-C₁₂, les A sont identiques ou différents et représentent un groupe alkylène CₓH₂ₓ avec x = 2, 3, 4 ou 5, et
les b sont identiques ou différents et représentent un nombre entier de 6 à 450,
le nombre moyen arithmétique de groupes alkylène A des unités structurales appartenant à l'unité structurale dérivée de vinyloxy-polyéther β étant supérieur d'au moins un facteur de 1,5 au nombre moyen arithmétique de groupes alkylène A des unités structurales appartenant à l'unité structurale dérivée d'isoprénol-polyéther α.

2. Composition polymère selon la revendication 1, contenant 11 à 75 % en poids d'un copolymère H et 6 à 55 % en poids d'un copolymère K.

3. Composition polymère selon la revendication 1 ou 2, **caractérisée en ce qu'**au moins 50 % en moles de l'ensemble des unités structurales du copolymère H et au moins 50 % en moles de l'ensemble des unités structurales du copolymère K se présentent à chaque fois sous la forme d'unités structurales à base de monomères acides.

4. Composition polymère selon l'une quelconque des revendications 1 à 3, **caractérisée en ce qu'**au moins 85 % en moles des unités structurales à base de macromonomères de polyéther du copolymère H sont représentées par l'unité structurale dérivée d'isoprénol-polyéther α de formule générale (Ia) 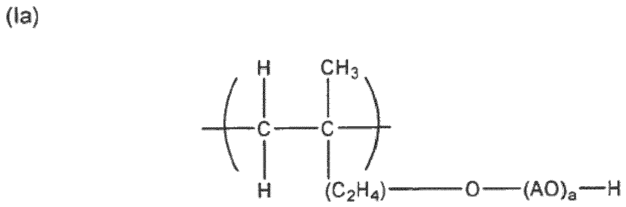 dans laquelle
les A sont identiques ou différents et représentent un groupe alkylène CₓH₂ₓ avec x = 2, 3, 4 ou 5, et
les a sont identiques ou différents et représentent un nombre entier compris entre 5 et 39.

5. Composition polymère selon l'une quelconque des revendications 1 à 4, **caractérisée en ce qu'**au moins 85 % en moles des unités structurales à base de macromonomères de polyéther du copolymère K sont représentées par l'unité structurale dérivée de vinyloxy-polyéther β de formule générale (Ib) 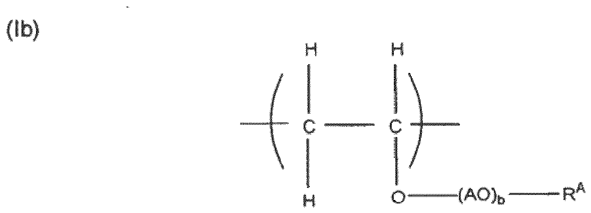 dans laquelle les R^{A} sont identiques ou différents et représentent un atome d'hydrogène, un groupe alkyle en C₁-C₁₂ linéaire ou ramifié, un groupe cycloalkyle en C₅-C₈, un groupe phényle ou un groupe arylalkyle en C₇-C₁₂,
les A sont identiques ou différents et représentent un groupe alkylène CₓH₂ₓ avec x = 2, 3, 4 ou 5, et
les b sont identiques ou différents et représentent un nombre entier de 41 à 400.

6. Composition polymère selon l'une quelconque des revendications 1 à 5, **caractérisée en ce que** le nombre moyen arithmétique de groupes alkylène A des unités structurales appartenant à l'unité structurale dérivée de vinyloxy-polyéther β est supérieur d'au moins un facteur de 2 au nombre moyen arithmétique de groupes alkylène A des unités structurales appartenant à l'unité structurale dérivée d'isoprénol-polyéther α.

7. Composition polymère selon l'une quelconque des revendications 1 à 6, **caractérisée en ce que** les unités structurales à base de monomères acides des copolymères H et K se présentent chacune selon l'une quelconque des formules générales (IIa), (IIb), (IIc) et/ou (IId) 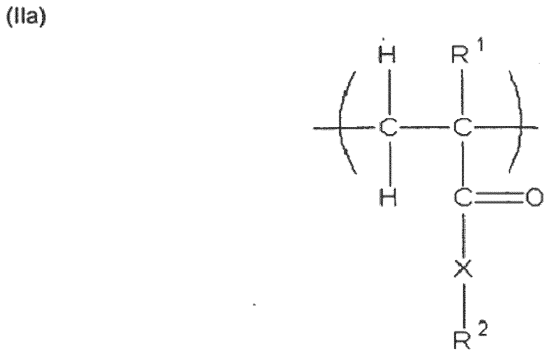 dans laquelle
les R¹ sont identiques ou différents et représentent H et/ou un groupe alkyle en C₁-C₄ non ramifié ou ramifié ;
les X sont identiques ou différents et représentent NH-(CₙH₂ₙ) avec n = 1, 2, 3 ou 4 et/ou O-(CₙH₂ₙ) avec n = 1, 2, 3 ou 4 et/ou une unité non présente ;
les R² sont identiques ou différents et représentent OH, SO₃H, PO₃H₂, O-PO₃H₂ et/ou C₆H₄-SO₃H à substitution para, à condition que R² représente OH si X représente une unité non présente ; 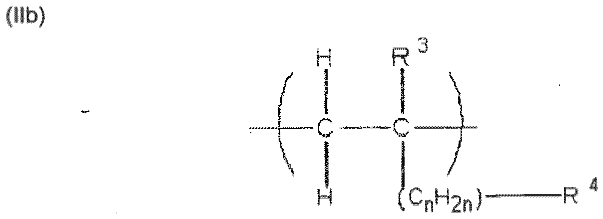 dans laquelle
les R³ sont identiques ou différents et représentent H et/ou un groupe alkyle en C₁-C₄ non ramifié ou ramifié ; n = 0, 1, 2, 3 ou 4,
les R⁴ sont identiques ou différents et représentent SO₃H, PO₃H₂, O-PO₃H₂ et/ou C₆H₄-SO₃H à substitution para ; 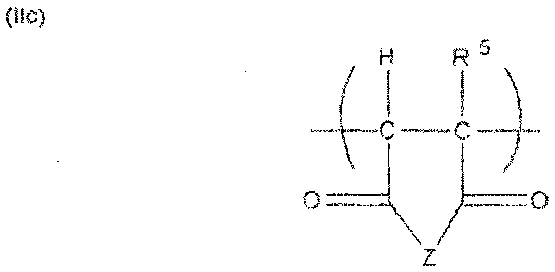 dans laquelle
les R⁵ sont identiques ou différents et représentent H et/ou un groupe alkyle en C₁-C₄ non ramifié ou ramifié ; les Z sont identiques ou différents et représentent O et/ou NH ; 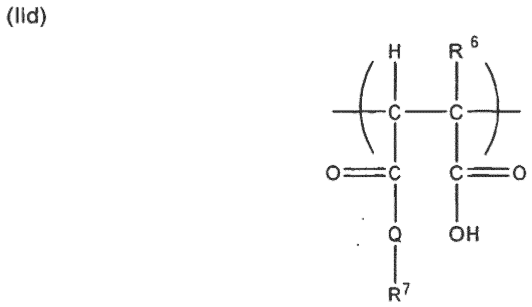 dans laquelle
les R⁶ sont identiques ou différents et représentent H et/ou un groupe alkyle en C₁-C₄ non ramifié ou ramifié ; les Q sont identiques ou différents et représentent NH et/ou O ;
les R⁷ sont identiques ou différents et représentent H, (CₙH₂ₙ)-SO₃H avec n = 0, 1, 2, 3 ou 4, (CₙH₂ₙ)-OH avec n = 0, 1, 2, 3 ou 4, (CₙH₂ₙ)-PO₃H₂ avec n = 0, 1, 2, 3 ou 4, (CₙH₂ₙ)-OPO₃H₂ avec n = 0, 1, 2, 3 ou 4, (C₆H₄)-SO₃H, (C₆H₄) -PO₃H₂, (C₆H₄)-OPO₃H₂ et/ou (CₘH₂ₘ)ₑ-O-(A'O)_{α}-R⁹ avec m = 0, 1, 2, 3 ou 4, e = 0, 1, 2, 3 ou 4, A' = C_{x'}H_{2x'} avec x' = 2, 3, 4 ou 5 et/ou CH₂C(C₆H₅)H-, α = un nombre entier de 1 à 350, les R⁹ étant identiques ou différents et représentant un groupe alkyle en C₁-C₄ non ramifié ou ramifié.

8. Composition polymère selon l'une quelconque des revendications 1 à 7, **caractérisée en ce que** les unités structurales à base de monomères acides des copolymères H et K sont chacune formées par copolymérisation des monomères acides acide méthacrylique, acide acrylique, acide maléique, anhydride de l'acide maléique et/ou demi-ester de l'acide maléique.

9. Composition polymère selon l'une quelconque des revendications 1 à 8, **caractérisée en ce que** les unités structurales dérivées de vinyloxy-polyéther β du copolymère K sont formées par copolymérisation d'un éther d'hydroxybutylvinyle alcoxylé contenant de préférence un nombre moyen arithmétique de groupes oxyalkylène de 41 à 400.

10. Composition polymère selon l'une quelconque des revendications 1 à 9, **caractérisée en ce que** les copolymères H et K comprennent chacun des types identiques ou différents d'unités structurales à base de monomères acides.

11. Composition polymère selon l'une quelconque des revendications 1 à 10, **caractérisée en ce qu'**à chaque fois au moins 80 % en moles de toutes les unités structurales des copolymères H et K sont formées par copolymérisation d'un monomère acide et d'un macromonomère de polyéther.

12. Dispersant contenant au moins 30 % en poids d'eau et au moins 10 % en poids de la composition polymère selon l'une quelconque des revendications 1 à 11.

13. Dispersant selon la revendication 12, qui se présente sous la forme d'une solution aqueuse.

14. Procédé de fabrication d'une composition polymère selon l'une quelconque des revendications 1 à 10 ou d'un dispersant selon la revendication 12 ou 13, **caractérisé en ce que** les copolymères H et K sont fabriqués chacun séparément l'un de l'autre dans une solution aqueuse, puis les copolymères fabriqués séparément ou les solutions aqueuses fabriquées séparément sont mélangé(e)s les un(e)s avec les autres.

15. Procédé selon la revendication 14, **caractérisé en ce qu'**un monomère acide et un macromonomère de polyéther sont mis en réaction en solution aqueuse par polymérisation radicalaire en utilisant un système d'initiateur redox contenant un peroxyde, la température de la solution aqueuse pendant la polymérisation étant de 10 à 45 °C et le pH étant de 3,5 à 6,5.

16. Utilisation d'une composition polymère selon l'une quelconque des revendications 1 à 15 en tant que dispersant pour liants hydrauliques et/ou pour liants hydrauliques latents.
